# EUROPEAN PATENT SPECIFICATION

(11) **EP 2 808 966 B1**
(45) Date of publication and mention of the grant of the patent: **09.05.2018**
(21) Application number: 13169512.4
(22) Date of filing: 28.05.2013
(51) Int. Cl.: H02G 15/00, H02G 15/013, H02G 15/113

(54) **Cable closure**
Kabelende
Fermeture de câble

(43) Date of publication of application: 03.12.2014
(73) Proprietor: CCS Technology, Inc., Wilmington, DE 19803 (US)
(72) Inventor: Thibault, Simon, 58099 Hagen (DE); Kupczyk, Andreas, 58099 Hagen (DE)
(74) Representative: Sturm, Christoph

(56) References cited:
- EP-A1- 0 045 239
- DE-A1- 10 341 005
- DE-U1-202010 006 582
- GB-A- 1 188 286
- GB-A- 2 151 723
- US-A1- 2005 167 431

## Description

The present patent application relates to a cable closure in accordance with the preamble of claim 1. The present application reflates further to a method for closing such a cable closure.

Cable closures are used in telecommunications cable networks for protecting spliced joints at connection points between two telecommunications cables and for protecting branch points or splitting points of telecommunications cables. In this case, the cable closures need to ensure the continuity of the telecommunications cables as though the telecommunications cables had not been interrupted.

The product catalog "Accessories for Fiber Optic Networks", Edition 1, page 75, Corning Cable Systems, 2001 discloses cable closures firstly in the form of inline cable closures and secondly in the form of dome cable closures, which all have a housing which defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and a sealing body, the sealing body defining cable insertion regions, which are sealed off on one side of the dome-like covering body and via which all of the cables can be inserted into the interior of the cable closure.

In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure according to the preamble of claim 1. Further prior art is disclosed in GB 2151723 and US2005167431. Against this background, the present patent application provides a novel cable closure having improved sealing properties.

This is accomplished by a cable closure according to claim 1.

The second sealing subcomponent is able to compensate for changes in the sealing properties of the first sealing subcomponent caused by temperature cycles during the operation of the cable closure in the field. Furthermore, the second sealing subcomponent is able to adapt the sealing elements to different cable diameters of the cables to be handled and sealed in the cable insertion regions. The pillow-like receptacle may be made from a solid and flexible material, The nozzle extends though through an opening in the covering body being sealed by the first sealing subcomponent.

The present patent application provides further a method for closing a cable closure as claimed, the method comprising: positioning a cable in the interior of the housing, wherein the cable extends into or out of the housing at one of the cable insertion regions provided by the covering body, and further wherein the sealing element positioned at the cable insertion region comprises the first and second sealing subcomponents; filling the pillow-like receptacle of the second sealing sub-component with a medium through the nozzle of the second sealing subcomponent, wherein the first sealing subcomponent is deformed by the pillow-like receptacle during the filling.

The method may further comprise: inserting the cable into the housing when the covering body is in an open configuration; and placing the covering body in a closed configuration, wherein the pillow-like receptacle of the second sealing subcomponent is filled with the medium when the covering body is closed. An embodiment of the invention will be explained in more detail, without any restriction being imposed, with reference to the drawing, in which:
- Figure 1: is a perspective view of the embodiment of a cable closure in form of an inline cable closure in a closed, completely locked status of the same;
- Figure 2: is a perspective view of the inline cable closure of Figure 1 in an opened status of the same;
- Figure 3: is a perspective view similar to Figure 2 with second sealing subcomponents being filled with a medium;
- Figure 4: is a perspective view similar to Figure 2 with first sealing subcomponents being removed;
- Figure 5: is a perspective view showing a second sealing subcomponent being exhausted;
- Figure 6: is a perspective view showing the second sealing subcomponent being filled with a medium.

The present invention relates to a cable closure 10, which in the embodiment shown is an inline cable closure comprising a housing which is formed by a covering body 13 composed of two shells 11 and 12.

In the embodiment shown, the shells 11 and 12 are half-shells and the half-shell 11 is a so-called lower shell and the half-shell 12 is a so-called upper shell of the covering body 13, which together define an interior 14 of the inline cable closure 10.

Cable insertion regions 17 are formed on mutually opposite sides 15 and 16 of the inline cable closure 10 or the covering body 13, with it being possible for cables to be inserted into the interior 14 of the inline cable closure 10 or passed out of said interior.

In the embodiment shown, two cable insertion regions 17 for inserting respective cables into the interior 14 of the inline cable closure 10 are formed on both mutually opposite sides 15 and 16 of the covering body 13.

In the shown embodiment, the half-shells 11 and 12 are hinged together at first sides 18, 19 of the same. In the shown embodiment said first sides 18, 19 are longitudinal sides of the shells 11, 12. The half-shells 11 and 12 can be pivoted with respect to each other around a hinge 20 by which the half-shells 11 and 12 are fixed to each other at said first longitudinal sides 18, 19 of the same. When the inline cable closure 10 is closed, second sides 21, 22 of the half-shells 11 and 12 can be locked to each other by a closing mechanism 23. In the embodiment said second sides 21, 22 are other longitudinal sides of the shells 11, 12.

In order to ensure that the cables to be inserted into the interior 14 of the inline cable closure 10 via the cable insertion regions 17 are sealed off, sealing elements 24 and 25, which are each arranged between first and second barrier walls 26 and 27, are positioned in the region of both mutually opposite sides 15 and 16 of the covering body 13 of the inline cable closure 10 on which the cable insertion regions 17 are formed, both in the region of the lower half-shell 11 and in the region of the upper half-shell 12. The sealing elements 24 are positioned in the region of the lower half-shell 11 and sealing elements 25 are positioned in the region of the upper half-shell 12.

The first barrier wall 26 is in each case, namely on both mutually opposite sides 15 and 16 in the region of the lower half-shell 11 and in the region of the upper half-shell 12, remote from the interior 14 of the inline cable closure 10 while the second barrier walls 27 is in each case facing the interior 14 of the cable closure 10. Each of said barrier walls 26 and 27, namely both the barrier walls 26 remote from the interior 14 and the barrier walls 27 facing the interior 14, extends transversely with respect to an insertion direction of the cable insertion regions 17.

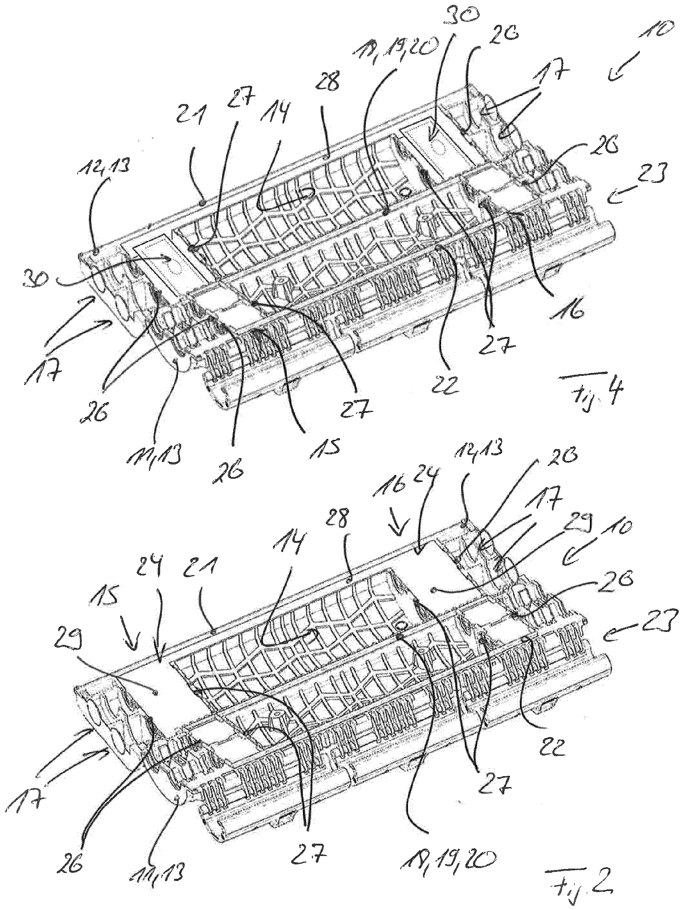

As shown in Figures 2-4, the sealing elements 24 of the upper half-shell 12, which are associated with the cable insertion regions 17, are coupled via sealing elements 28, which run parallel to longitudinal sides 18, 22 of the upper half-shell 12. As a result, an annular, closed sealing region is formed by the sealing elements 24 and 28 in the region of the upper half-shell 12. Possibly, an analogous sealing region can also be formed in the region of the lower half-shell 11.

As mentioned above, said half-shells 11, 12 of said covering body 13 are hinged together at said first longitudinal sides 18, 19 so that said two half-shells 11, 12 can be pivoted relative to each other around an axis or hinge 20 running parallel to said longitudinal sides 18, 19 when opening and closing the cable closure 10.

The closing mechanism 23 can be used to lock said half-shells 11, 12 of said covering body 13 to each other at second longitudinal sides 21, 22 of the same when said half-shells 11, 12 of said covering body 13 are in the closed position.

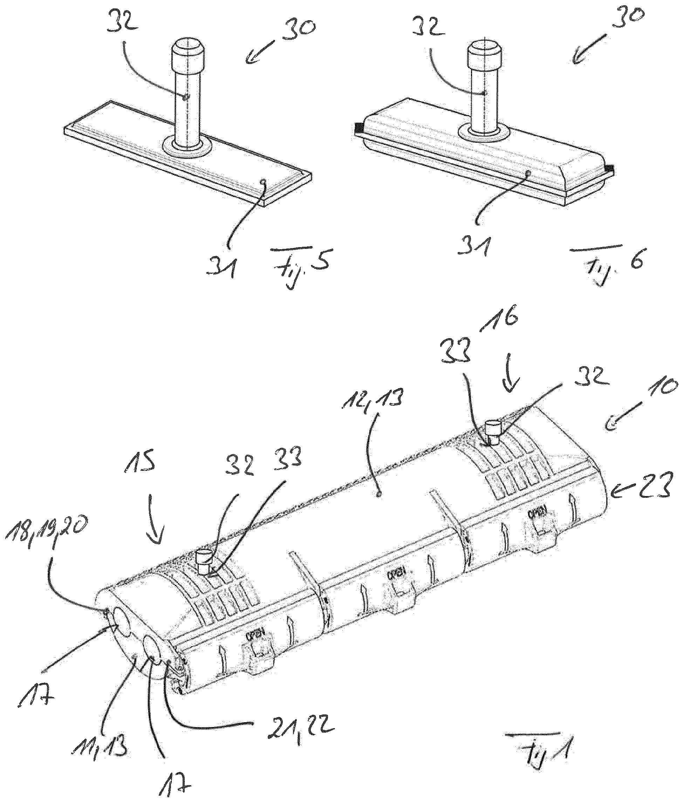

At least the sealing elements 24 of the upper half-shell 12, which are associated with the cable insertion regions 17, comprise at least two different sealing subcomponents, namely a first sealing subcomponent 29 made from a deformable sealing material and a second sealing subcomponent 30 embedded in the first sealing subcomponent 29. The second sealing subcomponent 30 comprises a pillow-like receptacle 31 and a nozzle 32 extending though the first sealing subcomponent 29 and through the covering body 13 to the exterior (see Figure 1).

The pillow-like receptacle 31 can be filled with a medium through the nozzle 32, especially when the covering body 13 is closed.

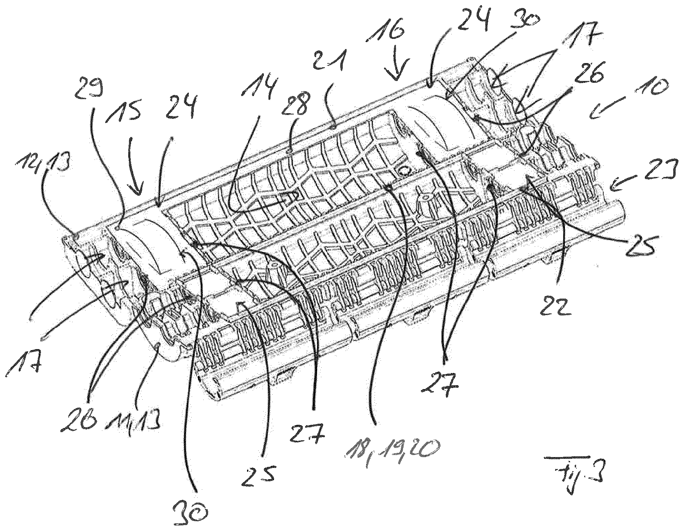

When the pillow-like receptacle 31 of the second sealing subcomponent 30 is filled with a medium, the first sealing subcomponent 29 becomes deformed (see Figure 3) by the pillow-like receptacle 31.

In particular, the pillow-like receptacle 31 expands due to the presence of the medium and, as a result, deforms the first sealing subcomponent 29 in which the second sealing subcomponent 30 is embedded. The second sealing subcomponent 30 is therefore an inflatable or expanding element.

The pillow-like receptacle 31 of the second sealing sub-element 30 is filled with a fluid medium. According to an unclaimed example, the pillow-like receptacle 31 is fillable with a gaseous medium like air or sulfur hexafluoride (SF6).

The pillow-like receptacle 31 is filled with a liquid medium like water or a mixture comprising water and a frost protection agent like glycol. The mixing ratio of the water and the frost protection agent may be preferably chosen in a way so that the liquid medium is subject to a phase transition from the liquid phase to a solid phase and thereby subject to a volume increase at a temperature at which the first sealing subcomponent 29 is subject to deteriorating sealing properties.

The volume increase of the liquid medium in the pillow-like receptacle 31 and thereby the volume increase of the second sealing subcomponent 30 being embedded in the first sealing subcomponent 29 may be used to compensate for deteriorating sealing properties of the first sealing subcomponent 29.

Advantageously, the mixing ratio of the water and the frost protection agent may be chosen in a way that the liquid medium is subject to a phase transition from the liquid phase to the solid phase and thereby subject to a volume increase at a temperature below -10°C (14°F).

The pillow-like receptacle 31 of the second sealing sub-element 30 may be made from a solid and flexible material, such as from polyurethane or rubber.

The nozzle 32 of the respective second sealing subcomponent 30 extends though through an opening 33 in the covering body 13, wherein the openings 33 are sealed by the respective first sealing subcomponents 29.

The first sealing subcomponents 29 may be gel-like sealing subcomponents, for example polyurethane gels or silicone gels. Such gel-like sealing elements are deformable.

It is also possible to use first sealing subcomponents 29 which are partially composed of different materials, for example from a deformable, gel-like sealing material and from a foam-like compressible sealing material.

When the cable closure 10 is in an opened state for installation purposes, the pillow-like receptacles 31 of the second sealing subcomponents 30 are exhausted from the liquid medium.

The cable closure 10 becomes closed with the pillow-like receptacles 31 of the second sealing subcomponents 30 being exhausted.

After the cable closure 10 is closed using the closing mechanism 23, the pillow-like receptacles 31 of the second sealing subcomponents 30 may be filled with a liquid medium using the nozzles 32 extending though the covering body 13 to the exterior.

It is also possible that alternatively to the sealing elements 24 of the upper half-shell 12 or in addition to the sealing elements 24 of the upper half-shell 12, the sealing elements 25 of the lower half-shell 11 comprise the at least two different sealing sub-components 29, 30.

However, most preferably only the sealing elements of one of said half-shells comprise the at least two different sealing sub-components 29, 30. The sealing elements of the other one of said half-shells comprise only the first sealing subcomponent 29.

Although only an inline cable closure is shown in the figures, the invention can also be used in connection with dome closures.

### List of reference numerals

- 10: inline cable closure
- 11: shell/lower half-shell
- 12: shell/upper half-shell
- 13: covering body
- 14: interior
- 15: side
- 16: side
- 17: cable insertion region
- 18: longitudinal side
- 19: longitudinal side
- 20: hinge
- 21: longitudinal side
- 22: longitudinal side
- 23: closing mechanism
- 24: sealing element
- 25: sealing element
- 26: barrier wall
- 27: barrier wall
- 28: sealing element
- 29: first sealing subcomponent
- 30: second sealing subcomponent
- 31: pillow-like receptacle
- 32: nozzle
- 33: opening

## Claims

1. A cable closure, having a housing, which delimits an interior of the cable closure and seals off the cable closure from the outside, said housing comprising a covering body (13), said covering body (13) providing cable insertion regions (17) for inserting cables into said interior of the cable closure and/or for passing cables out of said interior of the cable closure, wherein sealing elements (24) are positioned at said cable insertion regions (17), and wherein at least some of the sealing elements (24) which are positioned at the cable insertion regions (17) comprise at least two different sealing subcomponents (29, 30), namely a first sealing subcomponent (29) made from a deformable, gel-like sealing material and a second sealing subcomponent (30);
**characterized in that**
the second sealing subcomponent (30) is embedded in the first sealing subcomponent (29), wherein the second sealing subcomponent (30) comprises a pillow-like receptacle (31) and a nozzle (32) extending though the first sealing subcomponent (29) and through the covering body (13) to the outside, wherein the pillow-like receptacle (31) can be filled with a medium through the nozzle (32) when the covering body (13) is closed;
the pillow-like receptacle (31) of the second sealing subcomponent (30) is filled with a liquid medium that comprises water and a frost protection agent, wherein the mixing ratio of the water and the frost protection agent is chosen in a way that the liquid medium is subject to a phase transition from a liquid phase to a solid phase and thereby subject to a volume increase at a temperature below -10°C and thereby at temperatures at which the first sealing subcomponent (29) is subject to deteriorating sealing properties;
the nozzle (32) extends though through an opening in the covering body (13) that is sealed by the first sealing subcomponent (29).

2. The cable closure as claimed in claim 1, **characterized in that** the pillow-like receptacle (31) is made from a solid and flexible material.

3. The cable closure as claimed in claim 2, **characterized in that** the pillow-like receptacle (31) is made from polyurethane material or rubber material.

4. A method for closing a cable closure as claimed in one of claims 1-3, the method comprising:
positioning a cable in the interior of the housing, wherein the cable extends into or out of the housing at one of the cable insertion regions provid-ed by the covering body, and further wherein the sealing element positioned at the cable insertion region comprises the first and second sealing subcomponents;
filling the pillow-like receptacle of the second sealing subcomponent with a medium through the nozzle of the second sealing subcomponent, wherein the first sealing subcomponent is deformed by the pillow-like receptacle during the filling.

5. The method as claimed in claim 4, wherein positioning the cable further comprises:
inserting the cable into the housing when the covering body is in an open configuration; and
placing the covering body in a closed configuration, wherein the pillow-like receptacle of the second sealing subcomponent is filled with the medium when the covering body is closed.

## Patentansprüche

1. Kabelmuffe mit einem Gehäuse, das einen Innenraum der Kabelmuffe umgrenzt und die Kabelmuffe gegen die Außenwelt abdichtet, wobei das Gehäuse einen Abdeckkörper (13) aufweist, wobei der Abdeckkörper (13) Kabeldurchführungsbereiche (17) zum Einführen von Kabeln in den Innenraum der Kabelmuffe und/oder zum Herausführen von Kabeln aus dem Innenraum der Kabelmuffe vorsieht, wobei Dichtungselemente (24) an den Kabeldurchführungsbereichen (17) angeordnet sind und wobei wenigstens einige der Dichtungselemente (24), die an den Kabeldurchführungsbereichen (17) angeordnet sind, wenigstens zwei verschiedene Dichtungsteilkomponenten (29, 30) umfassen, nämlich eine erste Dichtungsteilkomponente (29), die aus einem verformbaren, gelartigen Dichtungsmaterial hergestellt ist, und eine zweite Dichtungsteilkomponente (30);
**dadurch gekennzeichnet, dass**
die zweite Dichtungsteilkomponente (30) in die erste Dichtungsteilkomponente (29) eingebettet ist, wobei die zweite Dichtungsteilkomponente (30) eine kissenartige Aufnahme (31) und einen Stutzen (32), der sich durch die erste Dichtungsteilkomponente (29) und durch den Abdeckkörper (13) nach außen erstreckt, aufweist, wobei die kissenartige Aufnahme (31) durch den Stutzen (32) mit einem Medium gefüllt werden kann, wenn der Abdeckkörper (13) geschlossen ist;
die kissenartige Aufnahme (31) der zweiten Dichtungsteilkomponente (30) mit einem flüssigen Medium gefüllt ist, das Wasser und ein Frostschutzmittel umfasst, wobei das Mischungsverhältnis von Wasser und Frostschutzmittel so gewählt wird, dass, bei einer Temperatur von unter -10°C und dadurch bei Temperaturen, bei denen die erste Dichtungsteilkomponente (29) einer Verschlechterung der Dichtungseigenschaften unterliegt, das flüssige Medium einem Phasenübergang von einer flüssigen Phase zu einer festen Phase unterliegt und dadurch einer Volumenzunahme unterliegt;
sich der Stutzen (32) durch eine Öffnung im Abdeckkörper (13) erstreckt, die von der ersten Dichtungsteilkomponente (29) abgedichtet ist.

2. Kabelmuffe nach Anspruch 1, **dadurch gekennzeichnet, dass** die kissenartige Aufnahme (31) aus einem festen und flexiblen Material hergestellt ist.

3. Kabelmuffe nach Anspruch 2, **dadurch gekennzeichnet, dass** die kissenartige Aufnahme (31) aus einem Polyurethanmaterial oder einem Kautschukmaterial hergestellt ist.

4. Verfahren zum Schließen einer Kabelmuffe nach einem der Ansprüche 1-3, wobei das Verfahren umfasst:
Anordnen eines Kabels im Innenraum des Gehäuses, wobei sich das Kabel an einem der Kabeldurchführungsbereiche, die im Abdeckkörper vorgesehen sind, in das Gehäuse hinein oder aus diesem heraus erstreckt, und wobei ferner das am Kabeldurchführungsbereich angeordnete Dichtungselement die erste und die zweite Dichtungsteilkomponente umfasst;
Füllen der kissenartigen Aufnahme der zweiten Dichtungsteilkomponente mit einem Medium durch den Stutzen der zweiten Dichtungsteilkomponente, wobei die erste Dichtungsteilkomponente während des Füllens durch die kissenartige Aufnahme verformt wird.

5. Verfahren nach Anspruch 4, wobei das Anordnen des Kabels ferner umfasst:
Einführen des Kabels in das Gehäuse, wenn sich der Abdeckkörper in einer offenen Konfiguration befindet; und
Platzieren des Abdeckkörpers in eine geschlossene Konfiguration, wobei die kissenartige Aufnahme der zweiten Dichtungsteilkomponente mit dem Medium gefüllt wird, wenn der Abdeckkörper geschlossen ist.

## Revendications

1. Manchon de câble, ayant un boîtier, qui délimite un intérieur du manchon de câble et scelle le manchon de câble par rapport à l'extérieur, ledit boîtier comprenant un corps de recouvrement (13), ledit corps de recouvrement (13) fournissant des régions d'insertion de câble (17) pour insérer des câbles dans ledit intérieur du manchon de câble et/ou faire passer des câbles hors dudit intérieur du manchon de câble, dans lequel des éléments d'étanchéité (24) sont positionnés au niveau desdites régions d'insertion de câble (17), et dans lequel au moins certains des éléments d'étanchéité (24) qui sont positionnés au niveau des régions d'insertion de câble (17) comprennent au moins deux sous-composants d'étanchéité différents (29, 30), à savoir un premier sous-composant d'étanchéité (29) constitué d'un matériau d'étanchéité déformable, en forme de gel, et un deuxième sous-composant d'étanchéité (30) ;
**caractérisé en ce que**
le deuxième sous-composant d'étanchéité (30) est enfoncé dans le premier sous-composant d'étanchéité (29), le deuxième sous-composant d'étanchéité (30) comprenant un récipient en forme d'oreiller (31) et une buse (32) s'étendant à travers le premier sous-composant d'étanchéité (29) et à travers le corps de recouvrement (13) jusqu'à l'extérieur, le récipient en forme d'oreiller (31) pouvant être rempli avec un milieu par la buse (32) quand le corps de recouvrement (13) est fermé ;
le récipient en forme d'oreiller (31) du deuxième sous-composant d'étanchéité (30) est rempli avec un milieu liquide qui comprend de l'eau et un agent antigel, le rapport de mélange de l'eau et de l'agent antigel étant choisi de manière à ce que le milieu liquide soit soumis à une transition de phase d'une phase liquide à une phase solide et ainsi soumis à une augmentation de volume à une température inférieure à -10 °C et de ce fait à des températures auxquelles le premier sous-composant d'étanchéité (29) est soumis à une détérioration des propriétés d'étanchéité ;
la buse (32) s'étend à travers une ouverture dans le corps de recouvrement (13) qui est scellée par le premier sous-composant d'étanchéité (29).

2. Manchon de câble selon la revendication 1, **caractérisé en ce que** le récipient en forme d'oreiller (31) est constitué d'un matériau solide et souple.

3. Manchon de câble selon la revendication 2, **caractérisé en ce que** le récipient en forme d'oreiller (31) est constitué d'un matériau à base de polyuréthane ou d'un matériau à base de caoutchouc.

4. Procédé de fermeture d'un manchon de câble selon une des revendications 1 à 3, le procédé comprenant :
le positionnement d'un câble dans l'intérieur du boîtier, le câble s'étendant à l'intérieur ou l'extérieur du boîtier au niveau d'une des régions d'insertion de câble fournies par le corps de recouvrement, et l'élément d'étanchéité positionné au niveau de la région d'insertion de câble comprenant en outre les premier et deuxième sous-composants d'étanchéité ;
le remplissage du récipient en forme d'oreiller du deuxième sous-composant d'étanchéité avec un milieu par la buse du deuxième sous-composant d'étanchéité, le premier sous-composant d'étanchéité étant déformé par le récipient en forme d'oreiller pendant le remplissage.

5. Procédé selon la revendication 4, dans lequel le positionnement du câble comprend en outre :
l'insertion du câble dans le boîtier quand le corps de recouvrement est dans une configuration ouverte ; et
le positionnement du corps de recouvrement dans une configuration fermée, le récipient en forme d'oreiller du deuxième sous-composant d'étanchéité étant rempli avec le milieu quand le corps de recouvrement est fermé.
